# EUROPEAN PATENT SPECIFICATION

(11) **EP 3 586 635 B1**
(45) Date of publication and mention of the grant of the patent: **29.05.2024**
(21) Application number: 19182595.9
(22) Date of filing: 26.06.2019
(51) Int. Cl.: A21C 9/04, A21C 15/00

(54) **DRIVE MECHANISM FOR DEPOSITER SYSTEM**
ANTRIEBSMECHANISMUS FÜR EIN ABSCHEIDERSYSTEM
MÉCANISME D'ENTRAÎNEMENT POUR SYSTÈME DE DÉPOSANT

(30) Priority: 26.06.2018 GB 201810464
(43) Date of publication of application: 01.01.2020
(73) Proprietor: WYMBS Engineering Limited, Stockport, Cheshire SK12 1YL (GB)
(72) Inventor: WYMBS, Brendan, Bollington, Cheshire SK10 5EJ (GB)
(74) Representative: Mewburn Ellis LLP

(56) References cited:
- CN-A- 107 821 514
- DE-C1- 19 618 482
- US-A- 2 262 640
- US-A- 3 185 129

## Description

### TECHNICAL FIELD

The present disclosure relates to the field of repetitive processing machines, and in particular depositing systems, which are typically used in the food manufacturing and processing industry. In particular, the disclosure relates to drive mechanism for driving a manifold of said system.

### BACKGROUND

Depositing systems are often used in the food manufacturing and processing industry. Food items such as biscuits or cakes often require a flowable substance to be applied as a topping or filling. For efficiency, throughput and consistency reasons, mechanical depositor systems are often used to deposit such fillings or toppings as a repetitive process

Such mechanical depositor systems may include a movable assembly in the form of a depositor manifold which is supported above a conveyor belt. The depositor manifold is movable in the sense that it can be driven to follow a predetermined pathway adjacent the conveyor belt. Typically, the depositor manifold is movable independently of the conveyor belt.

Typically, food items are transported around a production facility using a conveyor belt or similar means. If the items are relatively small, or if the production line has a large output, the items may be arranged in ranked rows on the conveyor belt. In the case that it is necessary to apply a filling or a topping to such items, the efficiency of the process may be optimised if this can be achieved whilst the conveyor belt is moving. It has therefore been proposed to use a movable depositor manifold carrying an array of outlet nozzles to direct the flowable substance onto each item carried by the conveyor. This may be achieved by mounting the depositor manifold above the conveyor, and controlling it so that it is driven cyclically through a predetermined pathway in which the manifold is lowered towards the conveyor, then moved in synchronism with the conveyor to deposit the flowable substance simultaneously onto the individual items of several ranked rows carried by the conveyor, before then being raised away from the conveyor and moved backwards, in the opposite direction to the conveyor, and then lowered ready to move in synchronism with the conveyor again whilst depositing the flowable substance onto the individual items of a subsequent series of ranked rows on the conveyor.

Typically the depositor manifold is required to follow and cyclic pattern, within an envelope of motion. The pattern may for example be circular, reciprocating, elliptical or a combination thereof.

A drive mechanism to drive the depositor manifold assembly may comprise a series of drive members to support and drive the manifold assembly through the cyclic pattern. A series of linear actuators may be implemented as the or part of the drive members. A drawback with linear actuators is that they may be prone to failure. Replacing a failed linear actuator can be difficult due to the market in linear actuators being highly progressive.

GB 2371845 A discloses a drive mechanism comprised of a rotary actuator that drives a gear assembly. The gear assembly is configured to drive a depositor manifold with a generally D-shaped, or other, cyclical pattern. The gear assembly of such a drive mechanism may, in particular implementations, be expensive to manufacture.

DE19618482 C1 discloses a drive mechanism for a repetitive processing machine according to the prior art.

In spite of the effort already invested in the development of drive mechanisms systems further improvements are desirable.

### SUMMARY

The invention is a drive mechanism according to claim 1, a method according to claim 12 and a use according to claim 14.

The present disclosure provides a drive mechanism for a repetitive processing machine and a method of repetitive processing of products as set forth in the appended claims. In the exemplary embodiments, the drive mechanism is for driving an output unit. The output unit may comprise a depositor manifold of a depositor system implementation of the repetitive processing machine. The drive mechanism comprises: a body; a carrier member configured to carry said depositor manifold, and; a drive linkage system comprising a first member and a second member. The first member is arranged to receive rotary motion relative the body at a first end from a first drive member. The second member is arranged to receive rotary motion relative the carrier at a first end from a second drive member. The first and second rotary member are rotatably connected at second ends thereof. A position of the carrier member relative the body is controllable to move with a cyclic movement by control of the first and second drive members. The cyclic movement may comprise a substantially linear movement.

By implementing a drive mechanism comprised of first and second members, which are driven to rotated at their ends by separate drive members and rotatably coupled to each other at the other ends, a carrier member carrying a depositor manifold can be driven through a range of cyclic trajectories, wherein the particular trajectory is selected based on convenient control of the drive members. An advantage is that the drive mechanism does not implement a complex gear assembly. An advantage is that the drive mechanism can be driven by cost effective rotary actuators, rather than linear actuators, which can suffer from the previously-mentioned drawbacks.

As used herein the term "rotatably connected" refers to the first and second members being coupled by a connection that is rotatable, e.g. by means of a common axis of rotation. The first and second member are independently rotatable of each other at said rotatable connection.

In exemplary embodiments, the carrier member is rotationally constrained relative the body. By rotationally constraining said carrier member, purely translational movement is conveyed to the depositor manifold, which is advantageous in ensuring the nozzle(s) of the depositor manifold remain aligned to a product and/or conduits supplying said manifold do not become twisted.

In an embodiment, the cyclic movement is one or more of: substantially linear reciprocating; circular; or D-shaped; elliptical; other repetitive movement. By implementing control of the drive members a wide-range of cyclical movements can be achieved, which can be customised for the desired depositing action.

In an embodiment, a length between an axis of rotation of the first end and an axis of rotation at a second end of the first member is equal to a corresponding length between an axis of rotation of the first end and an axis of rotation at a second end of the second member. By implementing equal length first and second members, control of the first and second drive members to achieve a particular trajectory of the cyclic motion may be simplified.

According to the invention, the second drive member is mountable to the carrier member such that it is rotationally constrained thereto. In exemplary embodiments the first drive member is mountable to the body such that it is rotationally constrained thereto. By implementing an attachment with said rotational constraint, rotational motion is conveyed from the drive members to the first and second members through the carrier member/body.

According to the invention, the drive mechanism comprises a stabilizing system to prevent rotation of the carrier relative the body. By implementing a stabilizing system to prevent relative rotation of the carrier member and body, control of the first and second drive members to achieve a particular trajectory is simplified. Moreover, it can be ensured that the depositor manifold remains arranged in an upright position during said cyclical movement, which is beneficial for maintaining nozzle alignment.

In an embodiment, the stabilizing system comprises at least one support linkage system, for example, 1 or 2 or 3 or 4. The support linkage system comprises a corresponding first member and a second member. By corresponding it is meant that the first member(s) of the support linkage system correspond to the first linkage of the drive linkage system, and the same in respect of the second members. The stabilizing system comprises a coupler member. The first and second members of the drive and support linkage systems are rotatably coupled at the coupler member at their second ends. They may rotate independently of the coupler member. The first and second members of the support linkage systems are rotatably coupled at their first ends to the body and carrier member respectively. By implementing such a configuration of stabilizing system, the drive mechanism may be easy to assemble and/or fabricate, for example, by common parts between the drive and support linkage systems. In an embodiment, the carrier member and coupler member may couple to the first and second members of the drive and support linkage systems at corresponding points. By corresponding points it is meant that the points of coupling on the carrier member and the coupler member are orientated the same distance from each other. By arranging the coupling of the carrier member and coupler member at corresponding points, the drive mechanism may be easy to assemble and/or fabricate, e.g. by a common fabrication process for both the carrier member and the coupler member.

In exemplary embodiments, the carrier member is rotatable about the rotatable connection of the first and second members. In exemplary embodiments, the coupler member is rotatable about the rotatable connection of the first and second members. By enabling said rotation, a wide envelope of movement of the carrier member is achieved, particularly by utilizing the length of the first and second members.

In an embodiment, the coupler member and/or body include a trajectory window through which the depositor manifold is arrangeable to extend. By enabling the depositor manifold to extend through a window of one or both of the coupler member and base, the drive mechanism may be formed more compactly. Moreover, a trajectory of an envelope of motion of the depositor manifold may be conveniently visualized.

In an embodiment, the first drive member is arrangeable on a side of the body and the first member is arranged on an opposed side of the body. In an embodiment, the second drive member is arrangeable on a side of the carrier member and the second member is arranged on an opposed side of the carrier member. By arranging the first drive member and first members on opposed sides of the body, the first drive member may be positioned compactly and/or without obstructing moving components of the drive mechanism.

In an embodiment, a drive shaft extends through the body and is rotationally constrained to the first member. In an embodiment, a drive shaft extends through the carrier member and is rotationally constrained to the second member. The drive shafts may be formed as part of the drive members. By arranging a drive shaft to extend though the body or carrier member, and to be rotatably constrained to the first or second member, the drive mechanism may compactly transmit the rotary motion to the linkage system. In an embodiment, the drive shaft may be integrated with the drive members.

In exemplary embodiments, the first member is independently rotatable of the body. In exemplary embodiments, the second member is independently rotatable of the carrier. By arranging said first and second members to be independently rotatable of the respective body and carrier, a greater range of movement of the depositor manifold is provided.

In exemplary embodiments, the drive mechanism includes a first drive member comprising a rotary actuator to drive the first member, a second drive member comprising actuator to drive the second member, control circuitry and a position orientation system to provide a position of said actuators to the control circuitry. The control circuitry is configured to control the drive mechanism based on the position of said actuators. By implementing a position orientation system to provide position information, e.g. as an electrical signal, to the control system the position of the drive mechanism can be conveniently interpreted. As used herein, the "position orientation system to provide a position of said actuators" may refer to a unit arranged to measure a position of the actuator of the drive member or another member connected to the actuator, e.g. the first member. The position system may comprise an encoder, e.g. a rotary encoder to provide information of shaft position for a rotary drive member. The position system may comprise a rotary actuator with integrated position determination, such as a DC step motor.

Disclosed herein is a drive mechanism in accordance with features of any preceding embodiment or another embodiment disclosed herein and an output unit, e.g. a depositor manifold, for attachment to the carrier of said drive system.

Disclosed herein is a repetitive processing machine, e.g. a deposing system, comprising a product transmission system, the drive mechanism in accordance with features of any preceding embodiment or another embodiment disclosed herein, and an output unit, e.g. a depositor manifold. The depositor manifold is drivable by the drive mechanism to deposit a substance on a product during transmission of the product with the product is transmitted by the product transmission system.

Disclosed herein is a method of repetitive processing of products, which include method of depositing a substance on a product. The method comprises driving, with a first drive member, a first member to rotate at a first end; driving, with a second drive member, a second member to rotate at a first end, wherein the first and second member are rotatably connected at second ends, wherein said driving causes a carrier member attached to the second drive member to move with a cyclic movement, the carrier member carrying an output unit, e.g. a depositor manifold. The method may comprise driving the first drive member and the second drive member based on feedback from a position orientation system. The method may be implemented in accordance with features of any preceding embodiment or another embodiment disclosed herein.

The preceding summary is provided for purposes of summarizing some embodiments to provide a basic understanding of aspects of the subject matter described herein. Accordingly, the above-described features are merely examples and should not be construed to narrow the scope or spirit of the subject matter described herein in any way. Moreover, the above and/or proceeding embodiments may be combined in any suitable combination to provide further embodiments. Other features, aspects, and advantages of the subject matter described herein will become apparent from the following Detailed Description, Figures, and Claims.

### BRIEF DESCRIPTION OF THE FIGURES

Aspects, features and advantages of embodiments of the present disclosure will become apparent from the following description of embodiments in reference to the appended drawings in which like numerals denote like elements.
Figure 1 is a schematic diagram showing embodiment componentry of a depositor system.
Figure 2 is a block system diagram showing embodiment componentry of a delivery system of the system of figure 1.
Figure 3 is a block system diagram showing an embodiment of the system of figure 1.
Figure 4 is a schematic diagram showing an embodiment of a drive system of the system of figure 1.
Figure 5 - 9 are schematic diagram showing embodiment of a drive system of the system of figure 1.

### DETAILED DESCRIPTION OF EMBODIMENTS

Before describing several embodiments of a repetitive processing system, it is to be understood that the system is not limited to the details of construction or process steps set forth in the following description. It will be apparent to those skilled in the art having the benefit of the present disclosure that the system is capable of other embodiments and of being practiced or being carried out in various ways.

The present disclosure may be better understood in view of the following explanations:
As used herein the term "**repetitive processing**" or "**repetitive processing machine**" may refer to a machine/operation in which products are processed in a repetitive manner. The products may be processed sequentially in ranked rows on a conveyor system. Each product may be processed in generally the same manner by the repetitive processing machine. Said processing of products may, in the implementation of a depositing system, include depositing a substance on or to form a product. In other implementations the repetitive processing may comprise moving of the products, e.g. pick- and-place (P&Ps) for other products, e.g. general manufacturing lines, which may not include the product as a foodstuff. In the general application of a repetitive processing machine a drive mechanism drives an "output unit". As used herein the term "**output unit**" may refer to a unit capable of providing the processing step of the repetitive processing machine. In the implementation of a depositing system the output unit is a depositor manifold. In other implementations, such as P&Ps it may be a robotic arm for manipulating a position of products.

As used herein the term "**depositor system**" may refer to a system for use in the food manufacturing and processing industry, for the depositing of a substance as defined herein onto a product as defined herein. A depositor system may include the apparatus and optionally other circuitry/componentry associated with the function of the apparatus, e.g. a peripheral device and/or other remote computing device.

As used herein the term "**substance**" may refer to a flowable substance for depositing on a product as defined herein. A substance may refer to one or more of a: liquid; solid; gel; foam; other substance. A substance may be deposited a topping or filling. A substance may include: cream; icing; and chocolate.

As used herein the term "**product**" may, in reference to a depositor system, refer to a food item that may comprise a substance and base, on which the substance is applied. A substance may include: biscuits; cakes; and chocolate. A product may be composed of at least the substance as defined herein but without the base.

As used herein the term "**depositor manifold**" may refer to a delivery member adapted to supply a substance as defined herein to a product as defined herein. A depositor manifold may include one or more nozzles arrange to supply a substance as defined herein.

As used herein the term "**product transmission system**" may refer to a system to transfer product bases to operative proximity of a depositor manifold for disposition of a substance on said base. A product transmission system is typically implemented, but is not limited to, a conveyor system. A product transmission system may be configured to transfer product bases in successions of ranked rows to the depositor manifold.

As used herein the term "**drive mechanism**" refers to an arrangement of mechanically linked components configured to drive the depositor manifold in a cyclic movement.

As used herein the term "**cyclic movement**" refers to a repetitive movement performed in a cycle, e.g. with common stating and end points. A cyclic movement may include one or more of: substantially linear reciprocating; circular; or D-shaped; elliptical; other repetitive movement.

As used herein the term "**drive member**" refers to a unit operable to drive the drive mechanism as defined herein. A drive member includes a rotary actuator adapted to supply rotary motion to the drive mechanism. A drive member may include an actuator, e.g. a shaft, movable to supply said movement.

As used herein, the term "**electrical circuitry**" or "**electric circuitry**" or "**circuitry**" or "**control circuitry**" may refer to, be part of, or include one or more of the following or other suitable hardware or software components: an Application Specific Integrated Circuit (ASIC); electronic/electrical circuit (e.g. passive components, which may include combinations of transistors, transformers, resistors, capacitors); a processor (shared, dedicated, or group); a memory (shared, dedicated, or group), that may execute one or more software or firmware programs; a combinational logic circuit. The electrical circuitry may be centralised on the apparatus or distributed, including distributed on board the apparatus and/or on one or more components in communication with the apparatus, e.g. as part of the system. The component may include one or more of a: networked-based computer (e.g. a remote server); cloud-based computer; peripheral device. The circuitry may be implemented in, or functions associated with the circuitry may be implemented by, one or more software or firmware modules. The circuitry may include logic, at least partially operable in hardware.

As used herein, the term "**processor**" or "**processing resource**" may refer to one or more units for processing including as an ASIC, microcontroller, FPGA, microprocessor, digital signal processor (DSP) capability, state machine or other suitable component. A processor may include a computer program, as machine readable instructions stored on a memory and/or programmable logic. The processor may have various arrangements corresponding to those discussed for the circuitry, e.g. on-board and/or off board the apparatus as part of the system.

As used herein, the term "**computer readable medium/media**" or "**data storage**" may include conventional non-transient memory, for example one or more of: random access memory (RAM); a CD-ROM; a hard drive; a solid state drive; a flash drive; a memory card; a DVD-ROM; a floppy disk; an optical drive,. The memory may have various arrangements corresponding to those discussed for the circuitry/processor.

As used herein, the term "**information carrying medium**" may include one or more arrangements for storage of information on any suitable medium. Examples include: data storage as defined herein; a Radio Frequency Identification (RFID) transponder; codes encoding information, such as optical (e.g. a bar code or QR code) or mechanically read codes (e.g. a configuration of the absence or presents of cut-outs to encode a bit, through which pins or a reader may be inserted).

As used herein the term "**control system**" refers to one or more of: control circuitry; data storage; processor, which are implemented to control the drive members of the drive mechanism to drive a depositor manifold with a particular movement, which may be cyclical. The drive members may be controlled by control of electrical current suppled thereto from an electrical power supply, e.g. in magnitude and/or on/off. Said control may be based on feedback from a position orientation unit.

In the following examples, a depositor system is described. It will be understood that the disclosure is not limited to a depositor system and may be suitably extended to other implementations of repetitive processing machines.

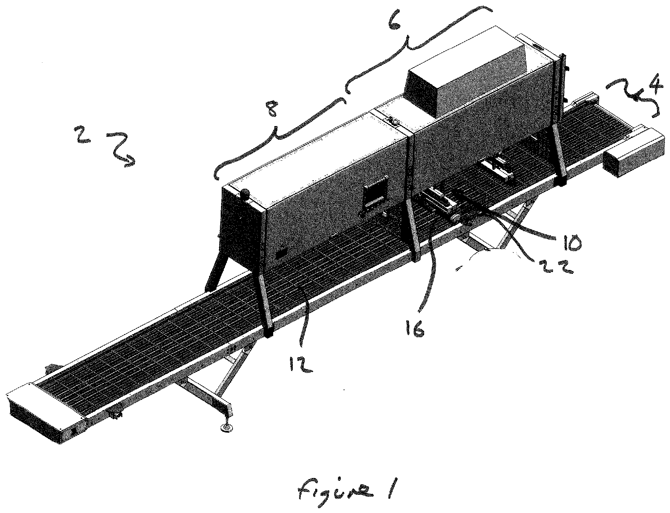

Referring to figure 1, an embodiment depositor system **2** includes; a product transmission system **4;** a delivery system **6;** a control system **8,** and; a drive system **10,** each of which will be described sequentially as follows.

Still referring to figure 1, the product transmission system **4** is implemented as a conveyor system, which is operable to transfer product bases (not shown) arranged thereon to operative proximity of one or more depositor manifolds of the delivery system **6.** Typically, the product transmission system **4** is implemented with a conveyor belt **12** and associated drive system (not shown). Although it will be understood that other implementations are possible, such as individual arms to hold and transmit a product.

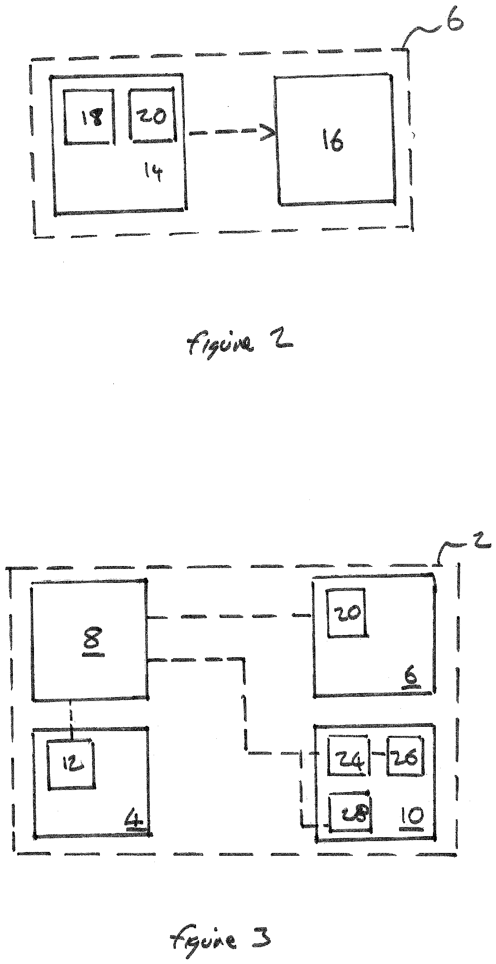

Referring to figures 1 and 2, the delivery system **6** includes a supply system **14** and a depositor manifold **16.** The supply system is operable to supply, in fluid form, a substance as defined herein. The supply system may be implemented as a reservoir **18** to contain said substance and a pumping system **20** to effect pressurized transmission of said substance from the reservoir **18** to the depositor manifold **16.** The depositor manifold **16** includes an outlet **22** from which the substance is transmitted.

Referring to figure 3, the control circuitry **8** may be operable to control the product transmission system 4 to deliver product bases to operative proximity of the outlet **22** of the depositor manifold **16.** The control circuitry **8** may, for example, control of the conveyor **12** on/off and speed by a conveyor drive and feedback system (both not shown). The control circuitry **8** may control the delivery system **6,** for example, by control of the pumping system **20** to supply the substance at the desired flow rate to the depositor manifold **16** and flow meter for feedback (not shown).

The control circuitry **8** is operable to control the drive system **10** to drive the depositor manifold **16** with the desired motion with respect to the conveyor **12.** Said control may be implemented by controlling operation of drive members **24** to drive a drive mechanism **26** in response to feedback from a position orientation system **28,** as will be discussed. A first and second drive member of the drive members **24,** depending on their particular implementation, may be controlled in terms of rotational speed and direction.

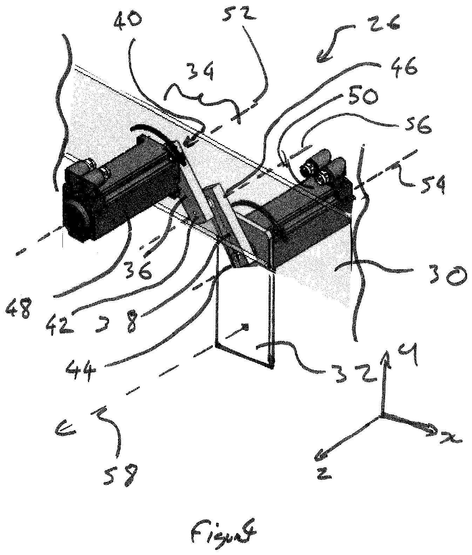

Referring to figure 4, the drive mechanism **26** may implement features of any of the preceding embodiments or other embodiments disclosed herein. The drive mechanism **26** includes a body **30;** a carrier member **32** configured to carry said depositor manifold **16** (not shown in figure 4); a drive linkage system **34** comprising a first member **36** and a second member **38,** wherein the first member **36** is arranged to receive rotary motion relative the body **30** at a first end **40** from a first drive member **48,** the second member **38** is arranged to receive rotary motion relative the carrier member **32** at a first end **44** from a second drive member **50,** the first and second members are rotatably connected at second ends **42, 46** thereof, wherein a position of the carrier member **32** relative the body **30** is controllable to move with a cyclic movement by control of the first and second drive members **48, 50.**

The drive member **48** applies rotary motion to the first end **40** of the first member **36** to cause the first member to rotate about an axis **52,** which is perpendicular to the length of the first member **36.** In an embodiment, a shaft (not shown) of the drive member **48** extends though the body **30** and is rotationally constrained to the first end **40** of the first member **36.** Said rotational constraint may be implemented by a key protruding from a keyway of the shaft for engagement with a corresponding cut-out adjacent a hole of the first end **40.** The shaft is able to rotate freely within a hole in the body **30** through which it extends.

The drive member **50** applies rotary motion to the first end **44** of the second member **38** to cause the second member to rotate about an axis **54,** which is perpendicular to the length of the second member **38.** In an embodiment, a shaft (not shown) of the drive member **50** extends though the carrier **32** and is rotationally constrained to the first end **44** of the second member **38.** Said rotational constraint may be implemented by a key protruding from a keyway of the shaft for engagement with a corresponding cut-out adjacent a hole of the first end **44.** The shaft is able to rotate freely within a hole in the carrier **32** through which it extends.

In other embodiments, the rotational constraint may be alternatively implemented, e.g. by a press-fit. In other embodiments, the shaft is formed integrally with the first member. In embodiments the drive member drives the shaft by a transmission system, e.g. a gear system.

The first member **36** and second member **38** are rotatably connected at their second ends **42, 46** about axis **56.** The rotatable connection may include an axle, which is inserted through holes (both not shown) in said members. The axle may be implemented with various configurations, e.g. rotationally constrained, including formed integrally with one of the members and free to rotate with respect to the other member or free to rotate with respect to both members.

The body **30** comprises a stationary member that may be fixed to the product transmission system **4,** e.g. by a removable attachment in the embodiment of a retrofit drive system. In other embodiments it may be an integral component of the depositor system **2.**

As illustrated in the embodiment of figure 4, a length between the axis **52** of rotation of the first end **40** and the axis **56** of rotation of the second end **42** of the first member **36** is equal to a length between the axis **54** of rotation of the first end **44** and the axis **56** of rotation at a second end **46** of the second member **38.** By implementing equal length first and second member, control of the first and second drive members to achieve a particular trajectory may be simplified.

In embodiments (which are not shown), the lengths may not be equal, e.g. the first member may be longer than the second member, or the converse. With such an implementation other cyclic motions may be possibly, or specific cyclic motions may be implemented with easier control of the drive members.

In the illustrated embodiment of figure 4, the body **30** receives the first drive member **48** on a first side and the first member **36** is arranged on an opposed second side of the body **30.** With such an implementation, the first member **36** can rotate without obstruction from the first drive member **48.** The body **30** may be configured to receive the first drive member **48** on the first side thereof, e.g. it may comprise a suitable mounting surface proximal the first member **36.** Said the mounting surface may comprise suitable means to attach the first drive member **48** to the body **30,** e.g. fixtures such as bolt holes.

In embodiments (which are not shown), the first drive member is arranged on the same side of the body as the first member. In such an embodiment, the position of the first drive member may not interfere with rotation of the first member by the implementation of a drive train to enable the first drive member to be positioned away from the rotational path of the first member. In an embodiment the first drive member integrates the body.

In the illustrated embodiment of figure 4, the carrier member **32** receives the second drive member **50** on a first side and the second member **38** is arranged on an opposed second side of the carrier member **32.** With such an implementation, the second member **38** can rotate without obstruction from the second drive member **50.** The carrier member **32** may be configured to receive the second drive member **50** on the first side thereof, e.g. it may comprise a suitable mounting surface proximal the second member **38.** Said the mounting surface may comprise suitable means to attach the second drive member **50** to the carrier member **32,** e.g. fixtures such as bolt holes.

In embodiments (which are not shown), the second drive member is arranged on the same side of the carrier member as the first member. In such an embodiment, the position of the second drive member may not interfere with rotation of the second member by the implementation of a drive train to enable the second drive member to be positioned away from the rotational path of the second member. In an embodiment the second drive member integrates the carrier member.

The carrier member **32** is configured to mount a depositor manifold **16** thereto, which can extend along an axis **56.** By configured to mount it is meant that it may comprise a suitable mounting surface. Said the mounting surface may comprise suitable means to attach the depositor manifold **16** to the carrier member **32,** e.g. fixtures such as bolt holes. In an embodiment the carrier member is formed integrally with the depositor manifold.

It will be understood that one or more of the aforementioned axes **52** to **58** are aligned to each other, including substantially aligned.

During movement of the drive mechanism **26,** it will be understood that the carrier member **32** remains aligned in the same plane, defined as the X-Y plane in figure 1. Moreover, during rotation of the first drive member **48** and/or the second drive member **50,** the carrier member **32** can be driven to translate in said plane only without rotation relative the body **30,** i.e. without rotation about the Z axis. In this way the displacement caused by rotation of the second member **38** by the second drive member **50** is fully conveyed to the carrier member **32.**

In an embodiment, rotational constraint of the carrier member **32** about the Z axis may be achieved by the inertia of the carrier member and/or the depositor manifold **16** attached thereto. In an alternative embodiment, the drive mechanism **26** includes a stabilization system to system to restrain rotation of the carrier member **32** relative the body **30,** whilst it is driven to translate.

In an embodiment, which is not shown, the stabilization system includes gyroscopic means arranged to create a gyroscopic force to resist said rotation.

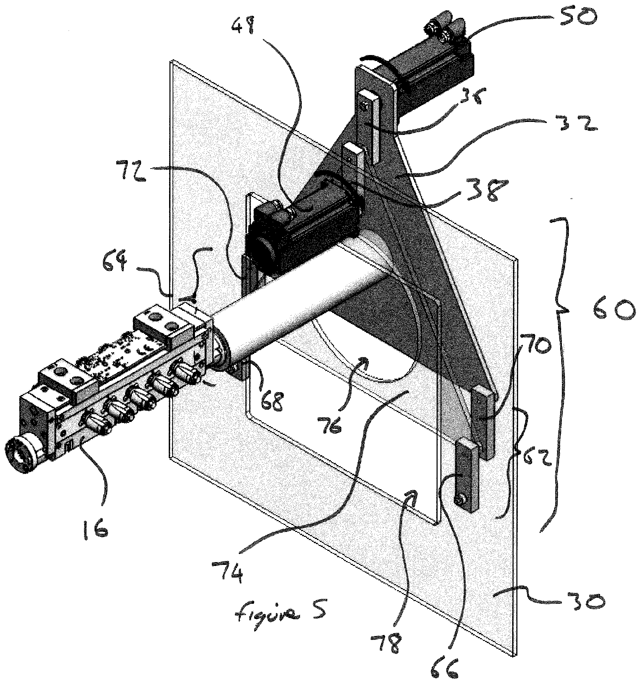

Referring to figures 5, the drive mechanism as described above implements an embodiment stabilization system **60.** The stabilization system **60** comprises two support linkage systems **62, 64** each comprising a corresponding first member **66, 68** and a second member **70, 72** and a coupler member **74.**

The first and second members **36, 38** of the drive linkage system **34** are rotatably coupled at their second ends at the coupler member **74.** The corresponding first and second members **66** to **72** of the support linkage system **62, 64** are rotatably coupled at their second ends at the coupler member **74.**

In an embodiment an axle couples the coupler member **74** and the first and second members **36, 38, 66** to **72,** the axle is inserted through holes (both not shown) in said members. The axle may be implemented with various configurations, e.g. rotationally constrained, including formed integrally with one of the members and free to rotate with respect to the other members or free to rotate with respect to all members.

The first and second members **66** to **72** of the support linkage systems **62, 64** are rotatably coupled at their first ends to the body **30** and carrier member **32** respectively. Said rotational coupling configuration can correspond to one of the herein described embodiments for the corresponding first and second member of the drive linkage system.

Since, in the embodiment, there is a single drive linkage system **34** and two support linkage systems **62, 64,** the body **30** coupler member **74** and carrier member **32,** couple at 3 points to said linkage systems **34, 62, 64.** The three points are arranged as an equilateral triangle, although it will be understood that other embodiment configurations are possible, such as an isosceles or scalene triangle. Accordingly, the body **30,** carrier member **32** and coupler member **74** all couple to the first and second members of the linkage systems at corresponding points, which form the vertexes of the triangular configuration.

In an embodiment, the coupler member **74** includes a trajectory window **76** through which the depositor manifold **16** is arrangeable to extend when mounted to the carrier member **32.** In this way the stabilization mechanism **60** does not obstruct movement of the depositor manifold **16.**

In an embodiment, the body **30** includes a trajectory window **78** through which the depositor manifold **16** is arrangeable to extend when mounted to the carrier member **32.** In this way the body **30** does not obstruct movement of the depositor manifold **16.**

Said trajectory windows **78, 76** may aid in a user when mounting said drive mechanism **26** to the product transmission system **4,** since it can enable convenient visualization of the possible trajectories of the depositor manifold **16.**

In embodiments (which are not illustrated), the stabilization system **60** comprises other numbers of drive linkage systems **62, 64,** e.g. 1 or 3 or other number, and the body **30,** coupler member **74** and carrier member **32** are suitably shaped to provide the correct number of mounting points for the linkage systems.

The first and second drive members **48, 50** may implement a position orientation **28** system to provide a rotational position of the shafts of the drive members (and therefore the first and second members) to the control circuitry **10.** The position orientation system may be implemented in various manners: a rotary encoder; step motor implementing the drive members, wherein the step control system comprises the position orientation system. The position orientation system may interface directly with the shaft of the actuator, or another shaft operatively connected thereto. It will be understood that the control system **10** can control the position of the manifold **16** based on the feedback from the position orientation system **28.**

The first drive member **48** may drive the first member **36** clockwise or counter-clockwise, independently of the driving of the second member **38** by the second drive member **50.** The converse applies in respect of the second drive member **50** driving the second member **38.**

It will be understood that the drive system **10** may implement a range of cyclical movements of the depositor manifold **16** depending on the rotational movement applied to the first and second members by the respective first and second drive members. Said cyclical movement may be one or more of: substantially linear; circular; D-shaped; elliptical.

In the following examples the first member **36** and second member **30** are the same length (i.e. between the axes of rotation at their ends). However, it will be understood that other ranges of motion are possible when said members are implemented with different lengths.

### Example 1: circular movement

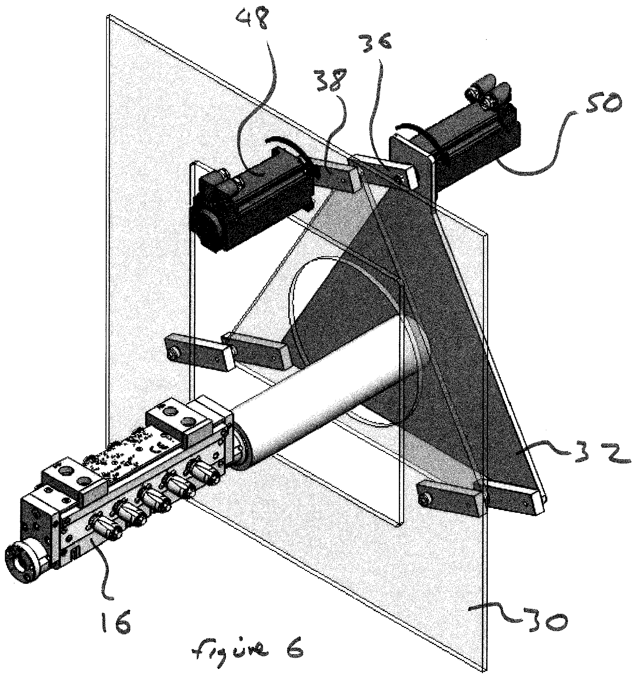

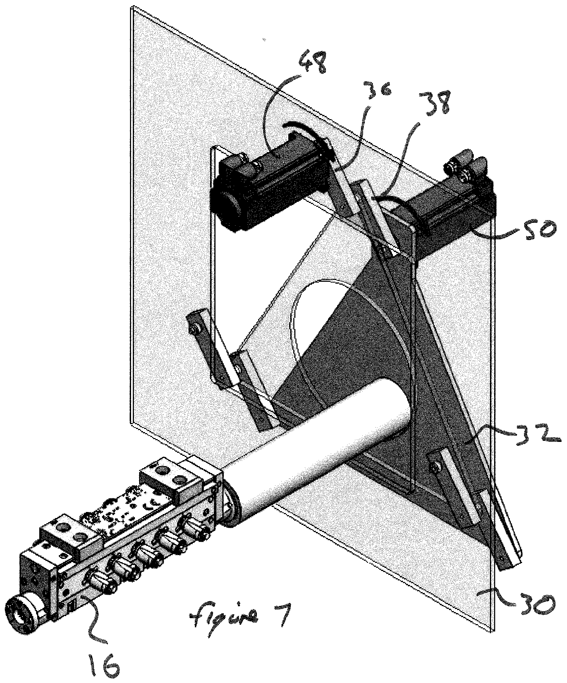

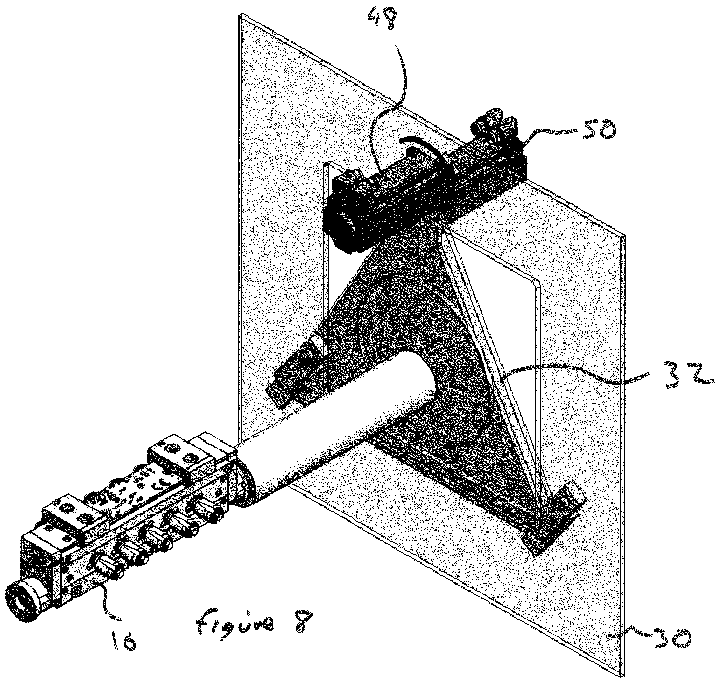

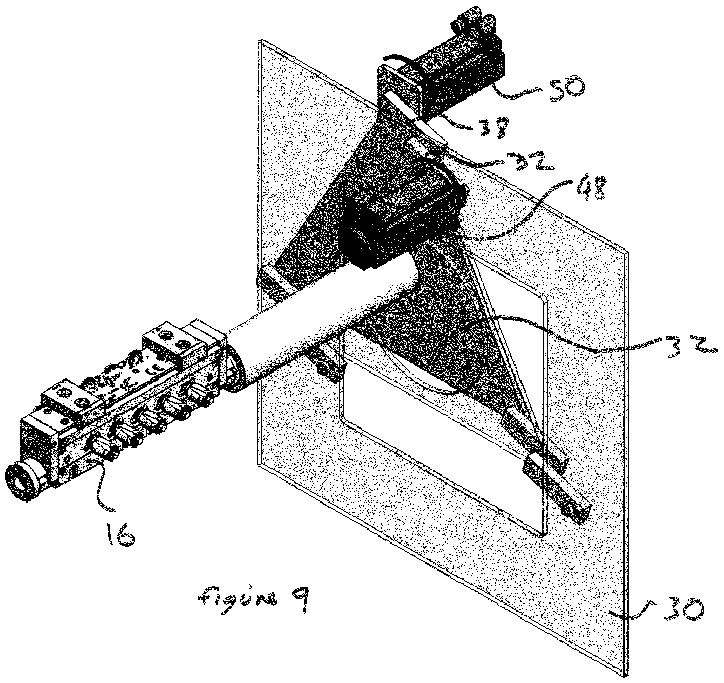

Referring to figures 5 to 9, the above embodiment implementation of the drive mechanism **26** is shown sequentially driving the depositor manifold **16** with a circular trajectory. In particular, the first drive member **48** is operated in the clockwise direction. The second drive member **50** is operated in the clockwise direction. Both drive members are operated at the same angular velocity, i.e. in phase with each other. Consequently, it can be observed that the first member **36** and second member **30** of the drive linkage system **34** remain longitudinally aligned during said movement.

### Example 2: linear movement

To achieve a linear movement (not shown), e.g. reciprocating to and away from a conveyor, the first drive member **48** is operated in one of a clockwise or counter-clockwise direction. The second drive member **50** is operated in the other of the clockwise or counter-clockwise direction. Both drive members are operated at the same angular velocity, i.e. in phase with each other.

With such a movement, it will be understood that the first member **36** and second member **30** of the drive linkage system **34** rotate in opposed directions to each other such that at the depositor manifold their net rotary motion cancels out to leave linear motion.

### Example 3: D-shaped movement

A D-shaped movement may be achieved by a combination of the circular movement and linear movement described in Example 1 and Example 2, e.g. via supposition of the two movements.

As used in this specification, any formulation used of the style "at least one of A, B or C", and the formulation "at least one of A, B and C" use a disjunctive "or" and a disjunctive "and" such that those formulations comprise any and all joint and several permutations of A, B, C, that is, A alone, B alone, C alone, A and B in any order, A and C in any order, B and C in any order and A, B, C in any order. There may be more or less than three features used in such formulations.

In the claims, any reference signs placed between parentheses shall not be construed as limiting the claim. The word 'comprising' does not exclude the presence of other elements or steps then those listed in a claim. Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles. Unless stated otherwise, terms such as "first" and "second" are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

Unless otherwise explicitly stated as incompatible, or the physics or otherwise of the embodiments, example or claims prevent such a combination, the features of the foregoing embodiments and examples, and of the following claims may be integrated together in any suitable arrangement, especially ones where there is a beneficial effect in doing so. This is not limited to only any specified benefit, and instead may arise from an "ex post facto" benefit. This is to say that the combination of features is not limited by the described forms, particularly the form (e.g. numbering) of the examples or embodiments.

Moreover, this also applies to the phrase "in one embodiment", "according to an embodiment" and the like, which are merely a stylistic form of wording and are not to be construed as limiting the following features to a separate embodiment to all other instances of the same or similar wording. This is to say, a reference to 'an', 'one' or 'some' embodiment(s) may be a reference to any one or more, and/or all embodiments, or combination(s) thereof, disclosed. Also, similarly, the reference to "the" embodiment may not be limited to the immediately preceding embodiment.

As used herein, any machine executable instructions, or compute readable media, may carry out a disclosed method, and may therefore be used synonymously with the term method, or each other. The foregoing description of one or more implementations provides illustration and description, but is not intended to be exhaustive or to limit the scope of the invention to the precise form disclosed. Modifications and variations are possible in light of the above teachings or may be acquired from practice of various implementations of the present disclosure.

### LIST OF REFERENCES

**2** Depositor system
**4** Product transmission system (conveyor)
**6** Delivery system
   **14** Supply system
      **18** Reservoir
      **20** Pumping system
   **16** Depositor manifold
      **22** Outlet
**8** Control system
**10** Drive system
   **24** Drive members
   **48** First drive member
   **50** Second drive member
**26** Drive mechanism
   **30** Body
      **78** Trajectory window
   **32** Carrier member
   **34** Drive linkage system
      **36** First members
         **40** First end
         **42** Second end
      **38** Second members
         **44** First end
         **46** Second end
   **60** Stabilization system
      **62, 64** Support linkage system
         **66, 68** First members
         **70, 72** Second members
      **74** Coupler member
         **76** Trajectory window
   **28** Position orientation system

## Claims

1. A drive mechanism (26) for a repetitive processing machine, the drive mechanism (26) comprising:
a body (30);
a carrier member (32) configured to carry an output unit;
a first drive member (48) comprising a rotary actuator rotationally constrained to the body (30);
a second drive member (50), separate to the first drive member (48), comprising a rotary actuator rotationally constrained to the carrier member (32);
a drive linkage system (34) comprising a first member (36) and a second member (38) that are rotatably connected about a first axis (56); and
a control system; wherein
the first member (36) is arranged to receive rotary motion relative the body (30) from the first drive member (48) to cause the first member (36) to rotate about a second axis (52) and with a length between the second axis (52) and first axis (56);
the second member (38) is arranged to receive rotary motion relative the carrier member (32) from the second drive member (50) to cause the second member (38) to rotate about a third axis (54) and with a length between the third axis (54) and first axis (56);
a stabilizing system (60) to provide a rotational constraint of the carrier member (32) relative the body (30) so that the carrier member (32) is rotationally constrained for translational movement; and
a position of the carrier member (32) relative the body (30) is controllable to move with a cyclic movement by the control system controlling rotational speed and direction of the first and second rotary actuators whilst the stabilizing system rotationally constrains the carrier member (32) relative to the body.

2. The drive mechanism (26) of any preceding claim, wherein the length between the second axis and the first axis of the first member (36) is equal to a length between the third axis and the first axis of the second member (38).

3. The drive mechanism (26) of claim 1, wherein stabilizing system (60) comprises:
at least one support linkage system (62, 64) comprising a corresponding first member (66, 68) and a second member (70, 72);
a coupler member (74),
wherein the first member (36, 62, 64) and second member (38, 70, 72) of the drive linkage system (34) and support linkage system (62, 64) are rotatably coupled at the coupler member (74) at their second ends and the first (62, 64) and second (70, 72) members of the support linkage system (62, 64) are rotatably coupled at their first ends to the body (30) and carrier member (32) respectively.

4. The drive mechanism (26) of claim 3, wherein the carrier member (32) and coupler member (74) couple to the first members (66, 68) of the linkage system (62, 64) at corresponding points.

5. The drive mechanism of either of claims 3 or 4, wherein the coupler member (74) and/or body (30) include a trajectory window through which the output unit is arrangeable to extend.

6. The drive mechanism (26) of claim 1, wherein the stabilizing system (60) comprises a gyroscope.

7. The drive mechanism (26) of any preceding claim, wherein the body (30) is configured to receive the first drive member (48) on a side of the body (30) and the first member (36) is arranged on an opposed side of the body (30) and/or carrier member (32) is configured to receive the second drive member (50) on a side of the carrier member (32) and the second member (38) is arranged on an opposed side of the carrier member (32).

8. The drive mechanism (26) of any preceding claim including a position orientation system (28) to provide a position of said actuators to the control circuitry.

9. The drive mechanism (26) of any preceding claim, wherein the cyclic movement includes one or more of: substantially linear; circular; D-shaped.

10. A system comprising a drive mechanism (26) of any preceding claim and an output unit configured as a depositor manifold for attachment to the carrier.

11. A deposing system comprising a product transmission system, the drive mechanism (26) of any of claims 1-9, and a depositor manifold drivable by the drive mechanism to deposit a substance on a product during transmission of the product with the product transmission system.

12. A method of repetitive processing of products, the method comprising:
controlling a drive mechanism having a drive linkage system (34) comprising a first member (36) and a second member (38) that are rotatably connected about a first axis (56);
driving a first drive member (48) comprising a rotary actuator to rotate the first member (36) at a second axis separated from the first axis by a length;
separately driving a second drive member (50) comprising a rotary actuator to rotate the second member (38) at a third axis, separated from the first axis by a length; and
controlling the speed and direction of the rotary actuators (48, 50) whilst a stabilising system (60) rotationally constrains the carrier member (32) relative to the body (30);
wherein said driving and controlling of the rotary actuators (48, 50) causes the carrier member (32) attached to the second drive member to move with a cyclic movement, the carrier member carrying an output unit and moving with translational movement.

13. The method of claim 12 comprising driving the first drive member (48) and the second drive member (50) based on feedback from a position orientation system.

14. Use of the drive mechanism of any of claims 1 to 9 for driving an output unit of a repetitive processing machine.

## Patentansprüche

1. Antriebsmechanismus (26) für eine repetitive Verarbeitungsmaschine, wobei der Antriebsmechanismus (26) Folgendes umfasst:
einen Körper (30);
ein Trägerelement (32), das ausgelegt ist, um eine Ausgabeeinheit zu tragen;
ein erstes Antriebselement (48), das einen Rotationsaktuator umfasst, der drehend an dem Körper (30) befestigt ist;
ein zweites Antriebselement (50), das von dem ersten Antriebselement (48) getrennt ist, das einen Rotationsaktuator umfasst, der drehend an dem Trägerelement (32) befestigt ist;
ein Antriebsverbindungssystem (34), das ein erstes Element (36) und ein zweites Element (38) umfasst, die um eine erste Achse (56) drehbar verbunden sind; und
ein Steuersystem; wobei
das erste Element (36) ausgelegt ist, um eine Drehbewegung relativ zum Körper (30) von dem ersten Antriebselement (48) zu erhalten, um zu bewirken, dass sich das erste Element (36) um eine zweite Achse (52) und mit einer Länge zwischen der zweiten Achse (52) und der ersten Achse (56) dreht;
das zweite Element (38) angeordnet ist, um eine Drehbewegung relativ zu dem Trägerelement (32) von dem zweiten Antriebselement (50) zu erhalten, um zu bewirken, dass sich das zweite Element (38) um eine dritte Achse (54) und mit einer Länge zwischen der dritten Achse (54) und der ersten Achse (56) dreht;
ein Stabilisierungssystem (60) zum Bereitstellen einer Dreheinschränkung des Trägerelements (32) relativ zum Körper (30), sodass das Trägerelement (32) in Hinblick auf eine translationale Bewegung in seiner Drehung gehindert wird; und
eine Position des Trägerelements (32) relativ zum Körper (30) durch das Steuersystem steuerbar ist, um sich mit einer zyklischen Bewegung zu bewegen, das die Drehzahl und die Richtung des ersten und des zweiten Rotationsaktuators steuert, während das Stabilisierungssystem das Trägerelement (32) relativ zum Körper in seiner Drehung beschränkt.

2. Antriebsmechanismus (26) nach dem vorangegangenen Anspruch, wobei die Länge zwischen der zweiten Achse und der ersten Achse des ersten Elements (36) gleich einer Länge zwischen der dritten Achse und der ersten Achse des zweiten Elements (38) ist.

3. Antriebsmechanismus (26) nach Anspruch 1, wobei das Stabilisierungssystem (60) Folgendes umfasst:
zumindest ein Trägerverbindungssystem (62, 64), umfassend ein entsprechendes erstes Element (66, 68) und ein zweites Element (70, 72);
ein Kopplungselement (74),
wobei das erste Element (36, 62, 64) und das zweite Element (38, 70, 72) des Antriebsverbindungssystems (34) und des Trägerverbindungssystems (62, 64) drehbar an dem Kopplungselement (74) an ihren zweiten Enden gekoppelt sind, und wobei das erste (62, 64) und das zweite (70, 72) Element des Trägerverbindungssystems (62, 64) an ihren ersten Enden drehbar mit dem Körper (30) bzw. dem Trägerelement (32) gekoppelt sind.

4. Antriebsmechanismus (26) nach Anspruch 3, wobei das Trägerelement (32) und das Kopplungselement (74) die ersten Elemente (66, 68) des Verbindungssystems (62, 64) an entsprechenden Punkten koppeln.

5. Antriebsmechanismus (26) nach Anspruch 3 oder 4, wobei das Kopplungselement (74) und/oder der Körper (30) ein Bahnfenster aufweisen, durch das die Ausgabeeinheit in ihrer Erstreckung angeordnet werden kann.

6. Antriebsmechanismus (26) nach Anspruch 1, wobei das Stabilisierungssystem (60) ein Gyroskop umfasst.

7. Antriebsmechanismus (26) nach einem vorangegangenen Anspruch, wobei der Körper (30) ausgelegt ist, um das erste Antriebselement (48) auf einer Seite des Körpers (30) aufzunehmen und das erste Element (36) auf einer gegenüberliegenden Seite des Körpers (30) angeordnet ist, und/oder das Trägerelement (32) ausgelegt ist, um das zweite Antriebselement (50) auf einer Seite des Trägerelements (32) aufzunehmen und das zweite Element (38) auf einer gegenüberliegenden Seite des Trägerelements (32) angeordnet ist.

8. Antriebsmechanismus (26) nach einem der vorangegangenen Ansprüche, der ein Positionsausrichtungssystem (28) aufweist, um eine Position der Aktuatoren an der Steuerschaltung bereitzustellen.

9. Antriebsmechanismus (26) nach einem der vorangegangenen Ansprüche, wobei die zyklische Bewegung eines oder mehrere aus Folgenden umfasst: im Wesentlichen linear; kreisförmig; D-förmig.

10. System, umfassend einen Antriebsmechanismus (26) nach einem der vorangegangenen Ansprüche und eine Ausgabeeinheit, die als Abscheidungsverteiler zur Anbringung an dem Träger ausgelegt ist.

11. Abscheidungssystem, das ein Produktübertragungssystem, einen Antriebsmechanismus (26) nach einem der Ansprüche 1 bis 9 und einen Abscheidungsverteiler umfasst, der durch den Antriebsmechanismus antreibbar ist, um eine Substanz während der Übertragung des Produkts mit dem Produktübertragungssystem auf einem Produkt abzuscheiden.

12. Verfahren zum repetitiven Verarbeiten von Produkten, wobei das Verfahren Folgendes umfasst:
Steuern eines Antriebsmechanismus, der ein Antriebsverbindungssystem (34) aufweist, das ein erstes Element (36) und ein zweites Element (38) umfasst, die drehbar um eine erste Achse (56) verbunden sind;
Antreiben eines ersten Antriebselements (48), das einen Rotationsaktuator umfasst, um das erste Element (36) um eine zweite Achse, die durch eine Länge von der ersten Achse getrennt ist, zu drehen;
getrenntes Antreiben eines zweiten Antriebselements (50), das einen Rotationsaktuator umfasst, um das zweite Element (38) um eine dritte Achse zu drehen, die durch eine Länge von der ersten Achse getrennt ist; und
Steuern der Drehzahl und Richtung der Rotationsaktuatoren (48, 50), während ein Stabilisierungssystem (60) das Trägerelement (32) relativ zum Körper (30) in seiner Drehung einschränkt;
wobei das Antreiben und Steuern der Rotationsaktuatoren (48, 50) bewirkt, dass sich das Trägerelement (32), das an dem zweiten Antriebselement angebracht ist, mit einer zyklischen Bewegung bewegt, wobei das Trägerelement eine Ausgabeeinheit trägt und sich mit einer translationalen Bewegung bewegt.

13. Verfahren nach Anspruch 12, umfassend das Antreiben des ersten Antriebselements (48) und des zweiten Antriebselements (50) basierend auf Rückmeldung von einem Positionsausrichtungssystem.

14. Verwendung eines Antriebsmechanismus nach einem der Ansprüche 1 bis 9 zum Antreiben einer Ausgabeeinheit einer repetitiven Verarbeitungsmaschine.

## Revendications

1. Mécanisme d'entraînement (26) pour une machine de traitement répétitif, le mécanisme d'entraînement (26) comprenant :
un corps (30) ;
un élément porteur (32) configuré pour porter une unité de sortie ;
un premier élément d'entraînement (48) comprenant un actionneur rotatif contraint en rotation au corps (30) ;
un second élément d'entraînement (50), séparé du premier élément d'entraînement (48), comprenant un actionneur rotatif contraint en rotation à l'élément porteur (32) ;
un système de liaison d'entraînement (34) comprenant un premier élément (36) et un second élément (38) qui sont reliés en rotation autour d'un premier axe (56) ; et
un système de commande ; dans lequel
le premier élément (36) est agencé pour recevoir un mouvement rotatif par rapport au corps (30) provenant du premier élément d'entraînement (48) pour amener le premier élément (36) à tourner autour d'un deuxième axe (52) et avec une longueur entre le deuxième axe (52) et le premier axe (56) ;
le second élément (38) est agencé pour recevoir un mouvement rotatif par rapport à l'élément porteur (32) provenant du second élément d'entraînement (50) pour amener le second élément (38) à tourner autour d'un troisième axe (54) et avec une longueur entre le troisième axe (54) et le premier axe (56) ;
un système de stabilisation (60) pour fournir une contrainte en rotation de l'élément porteur (32) par rapport au corps (30) de sorte que l'élément porteur (32) est contraint en rotation pour un mouvement de translation ; et
une position de l'élément porteur (32) par rapport au corps (30) peut être commandée pour se déplacer selon un mouvement cyclique par le système de commande commandant la vitesse et la direction de rotation des premier et second actionneurs rotatifs tandis que le système de stabilisation contraint en rotation l'élément porteur (32) par rapport au corps.

2. Mécanisme d'entraînement (26) selon l'une quelconque des revendications précédentes, dans lequel la longueur entre le deuxième axe et le premier axe du premier élément (36) est égale à une longueur entre le troisième axe et le premier axe du second élément (38).

3. Mécanisme d'entraînement (26) selon la revendication 1, dans lequel le système de stabilisation (60) comprend :
au moins un système de liaison de support (62, 64) comprenant un premier élément correspondant (66, 68) et un second élément (70, 72) ;
un élément coupleur (74),
dans lequel le premier élément (36, 62, 64) et le second élément (38, 70, 72) du système de liaison d'entraînement (34) et le système de liaison de support (62, 64) sont couplés en rotation au niveau de l'élément coupleur (74) au niveau de leurs secondes extrémités et les premier (62, 64) et second (70, 72) éléments du système de liaison de support (62, 64) sont couplés en rotation au niveau de leurs premières extrémités au corps (30) et à l'élément porteur (32), respectivement.

4. Mécanisme d'entraînement (26) selon la revendication 3, dans lequel l'élément porteur (32) et l'élément coupleur (74) se couplent aux premiers éléments (66, 68) du système de liaison (62, 64) au niveau de points correspondants.

5. Mécanisme d'entraînement selon l'une des revendications 3 ou 4, dans lequel l'élément coupleur (74) et/ou le corps (30) comportent une fenêtre de trajectoire à travers laquelle peut être agencée l'unité de sortie afin de s'étendre.

6. Mécanisme d'entraînement (26) selon la revendication 1, dans lequel le système de stabilisation (60) comprend un gyroscope.

7. Mécanisme d'entraînement (26) selon l'une quelconque des revendications précédentes, dans lequel le corps (30) est configuré pour recevoir le premier élément d'entraînement (48) sur un côté du corps (30) et le premier élément (36) est disposé sur un côté opposé du corps (30) et/ou l'élément porteur (32) est configuré pour recevoir le second élément d'entraînement (50) sur un côté de l'élément porteur (32) et le second élément (38) est disposé sur un côté opposé de l'élément porteur (32).

8. Mécanisme d'entraînement (26) selon l'une quelconque des revendications précédentes comportant un système d'orientation de position (28) pour fournir une position desdits actionneurs au circuit de commande.

9. Mécanisme d'entraînement (26) selon l'une quelconque des revendications précédentes, dans lequel le mouvement cyclique comporte un ou plusieurs mouvements parmi : sensiblement linéaire ; circulaire ; en forme de D.

10. Système comprenant un mécanisme d'entraînement (26) selon l'une quelconque des revendications précédentes et une unité de sortie configurée sous forme d'un collecteur de dépôt pour fixation au porteur.

11. Système de dépôt comprenant un système de transmission de produit, le mécanisme d'entraînement (26) selon l'une quelconque des revendications 1 à 9, et un collecteur de dépôt pouvant être entraîné par le mécanisme d'entraînement pour déposer une substance sur un produit lors de la transmission du produit à l'aide du système de transmission de produit.

12. Procédé de traitement répétitif de produits, le procédé comprenant les étapes consistant à :
commander un mécanisme d'entraînement ayant un système de liaison d'entraînement (34) comprenant un premier élément (36) et un second élément (38) qui sont reliés en rotation autour d'un premier axe (56) ;
entraîner un premier élément d'entraînement (48) comprenant un actionneur rotatif pour faire tourner le premier élément (36) au niveau d'un deuxième axe séparé du premier axe d'une longueur ;
entraîner séparément un second élément d'entraînement (50) comprenant un actionneur rotatif pour faire tourner le second élément (38) au niveau d'un troisième axe, séparé du premier axe d'une longueur ; et
commander la vitesse et la direction des actionneurs rotatifs (48, 50) tandis qu'un système de stabilisation (60) contraint en rotation l'élément porteur (32) par rapport au corps (30) ;
dans lequel lesdits entraînement et commande des actionneurs rotatifs (48, 50) amènent l'élément porteur (32) fixé au second élément d'entraînement à se déplacer selon un mouvement cyclique, l'élément porteur portant une unité de sortie et se déplaçant selon un mouvement de translation.

13. Procédé selon la revendication 12 comprenant l'entraînement du premier élément d'entraînement (48) et du second élément d'entraînement (50) sur la base d'une rétroaction provenant d'un système d'orientation de position.

14. Utilisation du mécanisme d'entraînement selon l'une quelconque des revendications 1 à 9 pour entraîner une unité de sortie d'une machine de traitement répétitif.
